# EUROPEAN PATENT SPECIFICATION

(11) **EP 3 091 779 B1**
(45) Date of publication and mention of the grant of the patent: **14.10.2020**
(21) Application number: 14792272.8
(22) Date of filing: 12.06.2014
(51) Int. Cl.: H04W 24/04, H04W 88/18

(54) **CELL INTERFERENCE INVESTIGATION METHOD AND SYSTEM, AND NETWORK MANAGER**
VERFAHREN UND SYSTEM ZUR UNTERSUCHUNG VON ZELLENINTERFERENZ UND NETZWERKMANAGER
SYSTÈME ET PROCÉDÉ DE RECHERCHE D'INTERFÉRENCE DE CELLULES ET GESTIONNAIRE DE RÉSEAU

(30) Priority: 31.12.2013 CN 201310753195
(43) Date of publication of application: 09.11.2016
(73) Proprietor: ZTE Corporation, Shenzhen, Guangdong 518057 (CN)
(72) Inventor: XUE, Hao, Shenzhen Guangdong 518057 (CN)
(74) Representative: Brunazzi, Stefano
(86) International application number: PCT/CN2014/079787
(87) International publication number: WO 2014/177113

(56) References cited:
- EP-A1- 2 665 305
- CN-A- 101 128 011
- CN-A- 102 164 375
- CN-A- 102 264 075
- CN-A- 102 868 458
- CN-A- 103 402 215
- US-A1- 2012 071 183
- US-A1- 2012 122 503
- US-A1- 2013 242 748

## Description

### Technical Field

The present disclosure relates to the field of communications, and in particular to a method and system for investigating cell interference, and a network manager.

### Background

In a wireless communication system, a cell not only receives signals the cell needs, but also may receive signals from other sources. The signals from the other sources may become interference, especially uplink interference, when the signals appear in a cell bandwidth range. When the cell receives serious uplink interference, the uplink interference can seriously affect a call quality, cause uplink drop and serious deterioration to indexes of call completing rate, and the like, and even can result in that large areas cannot access. If a type of an interference source can be identified quickly and precisely, an anti-interference strategy corresponding to characteristics of an interference signal can be taken to improve work performance of the wireless communication system. Therefore, an interference investigation and a renovation to the cell are important measures to improve network performance and indexes.

In the related art, a method usually used for identifying the interference source is analyzing frequency characteristic of the interference signal by using a frequency spectrograph and then identifying the interference source according to the frequency characteristic. However, an operation of using the frequency spectrograph to analyze and observe signals is too inconvenient. In addition, the frequency spectrograph is generally used to execute drive test location near (even may be in the whole network) the cell receiving the interference signal. Due to base stations distributed in remote places and probable complicated environments, data may not be obtained timely to be analyzed.

There is another technology to investigate interference by scanning base station spectrum. It is mainly setting threshold values of parameters to determine, by the base stations, whether the cell is subjected to interference, and then collecting analysis results from the base stations of certain areas to be analyzed by specialized software. For accurately determining whether the cell is subjected to the interference, increasing or stopping some service operations is needed. Sometimes an operation to close a site is even needed to investigate interference from adjacent sites, and the operation may affect uses of users in a present network. Further, deploying additional software may result in increasing cost and complication of the system.

The US Patent Application US 2012/122503 A1 describes a system and method for self-optimized inter-cell interference coordination in a wireless mobile network.

The US Patent Application US 2012/071183 A1 discloses technical solutions for a Radio Base Station and a control apparatus, and a method for abnormality detection.

The US Patent Application US 2013/242748 A1 provides technical solutions for a hierarchical network and interference management in wireless mobile networks.

The European Patent Application EP 2 665 305 A1 describes a method, device and system for detection of interference between mobile network base stations.

### Summary

The embodiments of present disclosure solve a problem that a method and system for investigating cell interference, and a network manager are provided to conveniently and effectively determine whether a cell is subjected to interference.

The invention is set out in the appended claims.

In one embodiment of the present disclosure, a method for investigating cell interference is provided, including:
a network manager sending a collection task to a base station; the network manager receiving interference parameters of a cell collected, according to the collection task, by the base station; and the network manager determining whether the cell is subjected to interference according to the interference parameters.

In an example embodiment, the network manager determining whether the cell is subjected to interference according to the interference parameters includes: drawing spectrum graphics in a bandwidth range of the cell according to the interference parameters, the spectrum graphics including a spectrum curve corresponding to the interference parameters; drawing an abnormal spectrum curve in the spectrum graphics according to a preset interference threshold value; and when collected points on the spectrum curve locate above the abnormal spectrum curve, determining that the cell is subjected to interference.

In an example embodiment, the network manager determining whether the cell is subjected to interference according to the interference parameters includes: drawing spectrum graphics in a bandwidth range of the cell according to the interference parameters, the spectrum graphics including a spectrum curve corresponding to the interference parameters; drawing a physical uplink control channel range curve in the spectrum graphics; drawing an abnormal spectrum curve in the spectrum graphics according to a preset interference threshold value; when collected points, which locate outside of the physical uplink control channel range curve and on the spectrum curve, locate above the abnormal spectrum curve, determining that the cell is subjected to interference.

In an example embodiment, the interference parameters are interference parameters of resource blocks on a bandwidth of the cell; wherein after determining that the cell is subjected to interference, the method further includes: locating interference, wherein locating the interference includes: acquiring a bandwidth range of the cell; acquiring sequence numbers of the resource blocks on a bandwidth of the cell and bandwidth occupied by the resource blocks; and acquiring a frequency band range where the interference occurs according to the sequence numbers of the resource blocks, the bandwidth occupied by the resource blocks and the bandwidth range of the cell.

In an example embodiment, after determining that the cell is subjected to interference, the method further includes: comparing the spectrum curve corresponding to the interference parameters with spectrum curves of preset-type interference source signals, and determining a type of the interference according to a compared result.

In an example embodiment, the interference parameters include at least one of low noise interference and signal power instantaneous value.

In another embodiment of the present disclosure, a network manager is provided, the network manager includes: a task component, a receiving component, and a determining component;
the task component, which is configured to send a collection task to a base station; the receiving component, which is configured to receive interference parameters of a cell collected, according to the collection task, by the base station; and the determining component, which is configured to determine whether the cell is subjected to interference according to the interference parameters.

In an example embodiment, the determining component includes a drawing sub-component and a determining sub-component: the drawing sub-component is configured to draw spectrum graphics in a bandwidth range of the cell according to the interference parameters, the spectrum graphics including a spectrum curve corresponding to the interference parameters, and draw an abnormal spectrum curve in the spectrum graphics according to a preset interference threshold value; and the determining sub-component is configured to determine that the cell is subjected to interference when collected points on the spectrum curve locate above the abnormal spectrum curve.

In an example embodiment, the determining component includes a drawing sub-component and a determining sub-component: the drawing sub-component is configured to draw spectrum graphics in a bandwidth range of the cell according to the interference parameters, the spectrum graphics including a spectrum curve corresponding to the interference parameters, draw a physical uplink control channel range curve in the spectrum graphics, and draw an abnormal spectrum curve in the spectrum graphics according to a preset interference threshold value; and the determining sub-component is configured to determine that the cell is subjected to interference when collected points, which locate outside of the physical uplink control channel range curve and on the spectrum curve, locate above the abnormal spectrum curve.

In an example embodiment, the interference parameters are interference parameters of resource blocks on a bandwidth of the cell; the network manager further includes an interference location component: the interference location component is configured to acquire a bandwidth range of the cell; the interference location component is further configured to acquire sequence numbers of the resource blocks on a bandwidth of the cell and bandwidth occupied by the resource blocks; and the interference location component is still further configured to acquire a frequency band range where the interference occurs according to the sequence numbers of the resource blocks, the bandwidth occupied by the resource blocks and the bandwidth range of the cell.

In an example embodiment, the interference parameters include at least one of low noise interference and signal power instantaneous value.

In another embodiment of the present disclosure, a system for investigating cell interference is provided, the system includes the network manager and the base station as described above. The network manager is configured to send a collection task to the base station; the base station is configured to collect interference parameters of a cell according to the collection task, and report the interference parameters to the network manager; and the network manager is configured to receive the interference parameters collected by the base station, and determine whether the cell is subjected to interference according to the interference parameters.

Advantages of the example embodiments of the present disclosure are described below:
With the method and system for investigating cell interference and the network manager provided by the present disclosure, the present disclosure can conveniently and effectively determine whether the cell is subjected to interference. The method for investigating cell interference provided by the present disclosure includes: a network manager sends a collection task to a base station, receives interference parameters of a cell collected, according to the collection task, by the base station, and determines whether the cell is subjected to interference according to the received interference parameters. Comparing with the related art, the present disclosure allows for using a network manager to investigate cell interference, avoids service-affecting operations such as closing a cell, cutting power of a base station, or the like in order to investigate the existence of interference, and does not require additional hardware cost and deploy other soft systems. Further, the cost is reduced, and the complexity of investigating interference is decreased.

### Brief Description of the Drawings

Fig. 1 is a schematic flowchart diagram of a method for investigating cell interference according to a first embodiment of the present disclosure;

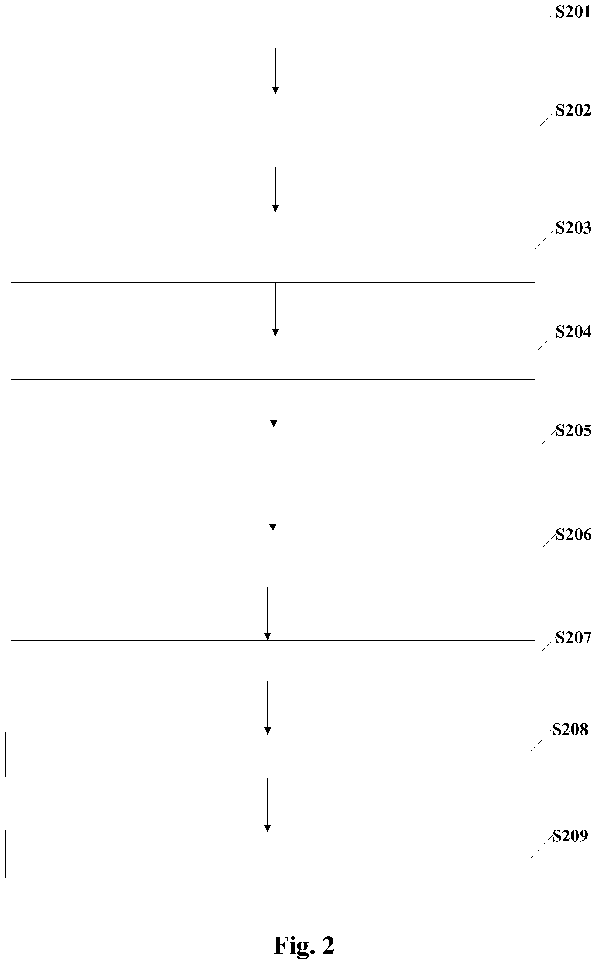

Fig. 2 is a schematic flowchart diagram of a method for investigating cell interference according to a second embodiment of the present disclosure;
Fig. 3 is a spectrum graphics drown corresponding to a parameter NI according to the second embodiment of the present disclosure; and
Fig. 4 is a structural schematic diagram of a network manager according to a third embodiment of the present disclosure; and
Fig. 5 is a structural schematic diagram of a system for cell investigating interference according to the third embodiment of the present disclosure.

### Detailed Description

To further illustrate the technical means adopted by the present disclosure to achieve an expected purpose and the achievements achieved thereby, the present disclosure is described below in detail in conjunction with accompanying drawings and example embodiments. At present, the related art in a field of wireless base station communication with distributed network managers includes base station software support platform, controller, network management center, and the like. Therefore, the present disclosure integrates spectrum scanning function into signaling tracking of a network manager, an existing data channel can be used, and extra spending used in network does not need to be added. Further, wireless resource configuration of a cell can be inquired conveniently to locate and investigate interference sources, and spectrum scanning can be conducted to network elements managed by the network manager simultaneously. Thus the interference sources can be located quickly.

### First example:

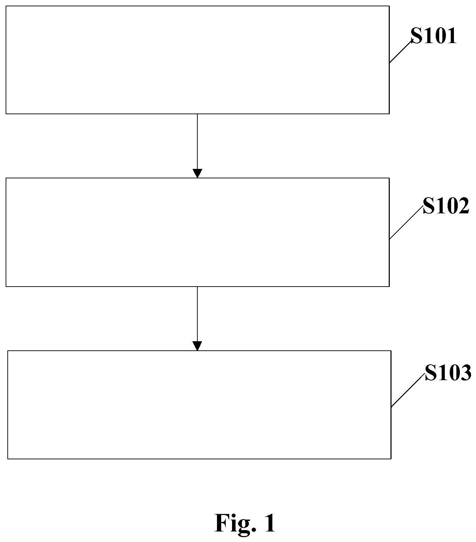

Referring to FIG. 1, a schematic flowchart diagram of a method for investigating cell interference according to a first embodiment of the present disclosure is provided. The method includes the following steps:
In step S101: a network manager sends a collection task to a base station.

Specifically, the network manager sets a spectrum scanning task, and the task includes a cell of the base station needed to be scanned spectrum, choosing related set parameters and interference parameters of to-be-collected data, namely the interference parameters needed for conducting scanned spectrum to the cell of the base station, the related set parameters including scanning mode, reporting period, period of task time, and the like. The scanning mode (stationary scanning or polling scanning) related to a cell of time division duplex-long term evolution advance (TDD-LTE for short) is different from that (full scanning or full bandwidth scanning) related to a cell of frequency division duplex (FDD for short). The stationary scanning collects specified interference parameters in each physical resource block (RB for short). The polling scanning collects interference parameters of sub frames, and collects interference parameters of all configured uplink sub frames. The full scanning collects interference parameters of all sub frames to obtain an average value and a maximum value based on RB. The full bandwidth scanning sets ports of PHY (an abbreviation of physical layer) firstly, after the ports of PHY being set successfully, and then collects the interference parameters of all sub frames to obtain an average value and a maximum value based on RB. The full bandwidth scanning may affect services, and is used in special situations. In this embodiment, a specific scanning task can be understood to conduct a corresponding setting and choose a corresponding scanning mode according to a specific circumstance.

In step S102: the network manager receives interference parameters of a cell collected, according to the collection task, by the base station.

Specifically, the base station parses the task when received the task from the network manager, and collects the interference parameters of the cell, that is, scanning the interference parameters in RB on the bandwidth of each cell.

Interference parameters in each RB on the bandwidth of each cell can be scanned also according to parameters of scanning period of the task and duration of the task in a certain period of time. After the interference parameters are collected, the interference parameters can be carried to a certain processing. For example, the interference parameters in each RB on the bandwidth of each cell can be scanned according to parameters of scanning period of the task and duration of the task in a certain period of time. After collecting, an average value and a maximum value of the collected parameters can be obtained. After the base station collects the interference parameters of the cell, the interference parameters can be packaged firstly, and then be sent to the network manager when a reporting period arrives. The packaged interference parameters includes: the number of the cell, mapping and analyzing for multiple cells at the same time, the numbers of uplink sub-frames, the bandwidth of the cell, the interference parameters, and the like.

In step S103: the network manager determines whether the cell is subjected to interference according to the interference parameters.

Specifically, when the network manager receives the interference parameters, the network manager determines whether the cell is subjected to interference according to the interference parameters.

In this example, determining whether the cell is subjected to interference according to the interference parameters may include: drawing a spectrum graphics in a bandwidth range of the cell according to the interference parameters, the spectrum graphics including a spectrum curve corresponding to the interference parameters, that is, when the network manager receives the interference parameters, the network manager correspondingly draws the spectrum graphics of the cell according to the interference parameters of each cell, where an average value of the interference parameters or a maximum value of the interference parameters can be used; then drawing an abnormal spectrum curve in the spectrum graphics according to a preset interference threshold value; and when collected points of the spectrum curve locate above the abnormal spectrum curve, determining that the cell is subjected to interference. That is, when the spectrum curve drawn has the collected points exceeding the interference threshold value, it is determined that the cell is subjected to interference. The interference threshold value can be specifically set according to specific interference parameters.

In addition, for avoiding a power of the physical uplink control channel (PUCCH) of the cell being too large to cause incorrect determination, the determination process may include: a spectrum graphics is drawn in a bandwidth range of the cell according to the interference parameters, the spectrum graphics including a spectrum curve corresponding to the interference parameters; a PUCCH range curve is drawn in the spectrum graphics; drawing an abnormal spectrum curve in the spectrum graphics according to a preset interference threshold value; when collected points, which locate outside of the PUCCH range curve and on the spectrum curve, locate above the abnormal spectrum curve, it is determined that the cell is subjected to interference.

For preferably investigating interference cell, interference grades can be ranked according to interference thresholds, that is, the interference threshold values respectively corresponding to different grades can be set, and corresponding abnormal spectrum curves to the interference threshold values can be accordingly drawn. When the spectrum curves of the spectrum graphics drawn have the collected points locating above an abnormal spectrum curve, the interference grade to which the collected points are corresponding is a grade of an interference threshold value to which the abnormal spectrum curve is corresponding. Certainly, for determining more accurately, a spectrum curve outside of the PUCCH range can be chosen for determining. Specific interference grades may be ranked as non-interference, light interference and strong interference according to, such as the interference threshold values. For example, three interference threshold values including a first interference threshold value, a second interference threshold value and a third interference threshold value are set. When the spectrum curve locates below the abnormal spectrum curve to which the first interference threshold value is corresponding, the non-interference is determined. When the spectrum curve locates above the abnormal spectrum curve to which the first interference threshold value is corresponding and below the abnormal spectrum curve corresponding to the second interference threshold value, the light interference is determined. The strong interference can be determined in the same manner. Therefore, when investigating interference, strong interference cell can be investigated firstly, and then moderate interference cell can be investigated, and the interference can be investigated more quickly and precisely.

In order to facilitate technicians to solve the problem of interference, the method in this embodiment may further conduct a location process after determining interference, the process may include:
After determining that the cell is subjected to interference, the method further includes: a step of interference location, the step including: acquiring the bandwidth range of the cell; acquiring sequence numbers of the resource blocks on the bandwidth of the cell and bandwidth occupied by the resource blocks; acquiring a frequency band range where the interference occurs according to the sequence numbers of the resource blocks, the bandwidth occupied by the resource blocks and the bandwidth range of the cell. That is, after determining that the cell is subjected to interference according to the interference parameters, wireless resource configuration of the cell can be inquired from a database of the network manager, the wireless resource configuration including the bandwidth range of the cell, the RB on the bandwidth of the cell, and the like. When center carrier frequency and width of the RB are obtained, a relationship between each RB and frequency can be accordingly obtained. For example, if the system bandwidth of the cell is 20MHz, frequency band is 38, center frequency point is 2560MHz, then the bandwidth range of the cell is 2570MHz ∼ 2590MHz. In LTE, each RB includes 12 sub-carriers in frequency domain resource. The bandwidth of each sub-carrier is 15KHZ, thus the bandwidth occupied by an RB is 180KHZ. The frequency band range where the interference occurs can be calculated according to the sequence number of the reported RB, and the frequency band range to which each RB is corresponding can also be divided according to the sequence number of the RB. For example, when the center frequency point is inquired, the bandwidth of the cell is calculated by:
center frequency point = start frequency point + bandwidth of the cell / 2
end frequency point = start frequency point + bandwidth of the cell

If the center frequency point is 2560MHz, the bandwidth is 20M, then the bandwidth range of the cell is 2570MHz ∼ 2590MHz. In the LTE, each RB includes 12 sub-carriers in frequency domain resource. The bandwidth of each sub-carrier is 15KHZ, thus the bandwidth occupied by an RB is 180KHZ. The frequency band range where the interference occurs can be calculated according to the sequence number of the reported RB, and the frequency band range corresponding to each RB can also be divided according to the sequence number of the RB.

In order to facilitate to investigate interference, after determining or locating interference, the method of this embodiment further includes: the spectrum curve corresponding to the interference parameters is compared with spectrum curves of preset-type interference source signals, and a type of the interference is determined according to a compared result. By using data of signals of the interference sources including multiple usual types and built in the network manager, when determining that the interference exists, the obtained spectrum curve is automatically compared with the spectrum curves of the interference source signals existing in the database. Therefore, determining a type of the interference source can be obtained more accurately and quickly. Practice has proved that, characteristic of the spectrum graphics of the cells receiving the same type of interference is almost completely the same as each another (or becomes the same as each another after a technical process). It can be launched that, analyzed results of the frequency scanning data of backgrounds of the cells receiving the same type of interference should be the same (it is also the fact). After determining the type of the interference, an interference solution can be obtained according to the type of the interference. Usual types of interference in LTE system and the interference solution are stored in the database. Therefore, the corresponding interference solution can be inquired according to the type of the interference determined. The database can be accumulated and improved with interference solutions according to practices.

In this embodiment, the interference parameters include at least one of low noise interference NI and signal power instantaneous value POWER, and may further include other parameters. The values of the low noise interference and the signal power instantaneous value per se can be used, and maximum value or average value of the low noise interference and the signal power instantaneous can be also used.

### Second example:

This example takes the interference parameter being NI as an example to describe the method of the present disclosure in detail, specifically as below:
In step S201: a network manager sets a spectrum scanning task, the task including a cell of a base station needing to be scanned spectrum, choosing scanning mode, reporting period and period of task time.

The scanning mode (stationary scanning or polling scanning) related to a cell of TD-LTE is different from that (full scanning or full bandwidth scanning) related to a cell of FDD.

The stationary scanning collects NI of uplink sub frames corresponding to specified numbers in each RB.

The polling scanning collects NI of sub-frames, and collects NI of all configured uplink sub-frames.

The full scanning collects NI of all sub-frames to obtain an average value and a maximum value based on RB.

The full bandwidth scanning sets ports of PHY (physical layer) firstly and, after the ports of PHY being set successfully, then collects NI of all sub-frames to obtain an average value and a maximum value based on RB. The full bandwidth scanning may affect services, and is used in special situations.

In step S202: when a network element receives a task of starting spectrum scanning, CMAC (control medium access control) sub-system parsing parameters of the task and collecting data.

The NI and the POWER in each RB on the bandwidth of each cell are scanned according to parameters of scanning period of the task and duration of the task in a certain period of time.

Methods for calculating the NI have existed, and not explained here.

According to different scanning tasks, a specific scanning task collects data of sub-frames in each RB reported in each reporting period by a corresponding scanning mode to the specific scanning task. The data may include the average value and/or the maximum value of the RB. That is, the data of sub-frames in each RB is collected firstly according to a collecting task, the data including the average value and/or the maximum value of the RB.

In step S203: after CMAC collects the data, in order to facilitate the network manager to parse and draw, the data is needed to be packaged, and when a reporting period arrives, the packaged data is reported to the network manager.

The packaged data includes: the number of the cell, mapping and analyzing for multiple cells at the same time, the numbers of uplink sub-frames, the bandwidth of the cell, a maximum value array of NI reporting uniformly according to 100 RBs per 20M bandwidth and uniformly writing 0 corresponding to the NI in invalid RBs, a average value array of NI, a maximum value array of POWER, a average value array of POWER, starting locations of RBs of Prach, numbers of RBs occupied by Prach channels (Prach channels are at two sides of the bandwidth), locations of RBs of Pucch Ack (Ack correct feedback).

In step S204: when the network manager receives the data, the network manager conducts to mapping.

According to the number of the cell, the network manager creates a graphics for each cell.

According to the number of the bandwidth, a range of horizontal coordinates of the graphics is scanned: 20M = 100RB, 15M = 75RB, 10M = 50RB, 5M = 25RB, 3M = 15RB, 1.4M = 6RB.

According to ranges of the values of the NI and the POWER, a range of vertical coordinates of the graphics is scanned: 0 ∼ -106dBm.

According to the average value of NI and the maximum value of NI, two curves are drawn. The maximum value or the average value can be chosen here to determine interference, and the curve not to be used may not need to be drawn.

In addition, a range of Pucch channels can be indicated on the graphics.

In step S205, the network manager sets interference thresholds, and determines whether that the cell is subjected to interference.

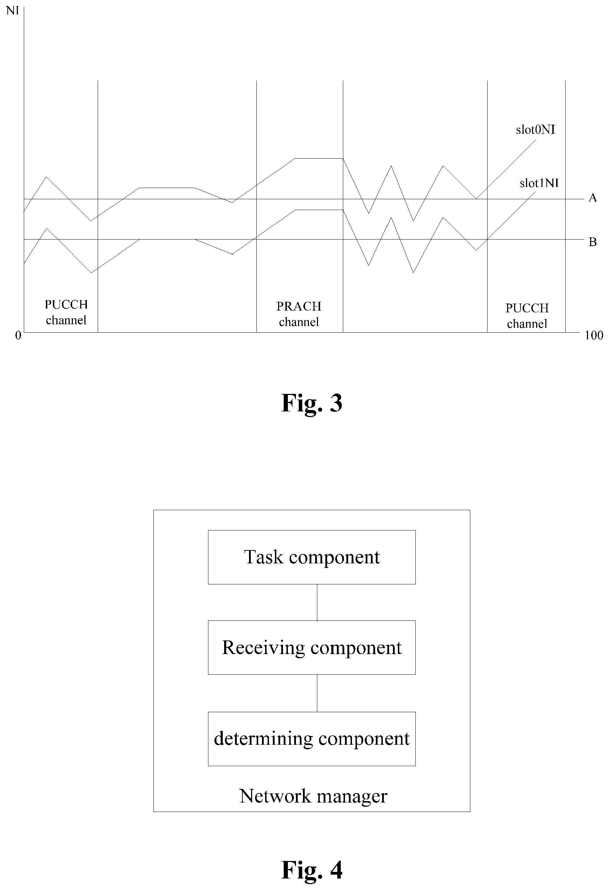

Specifically, a threshold value of NI is set, and an abnormal curve of NI is drawn according to the threshold value. When NI in an RB locates above the abnormal curve of NI, that is, NI > the threshold value of NI, it is determined that the cell is subjected to interference, and an alarm is issued. The threshold value of NI can be defined by a user, for conveniently avoiding an NI interference alarm caused by PUCCH power of the cell being too large, the NI interference alarm can use a value of NI outside of the PUCCH range as a basis whether the interference exists. As shown in FIG. 3 specifically, two spectrum curves of NI are drawn in the figure, one is the spectrum curve slotlNI of the average value of NI collected, and the other one is the spectrum curve slot0NI of the maximum value of NI collected. Two abnormal spectrum curves are further drawn, one is the abnormal average value spectrum curve, that is average abnormal curve A, and the other one is the abnormal maximum value spectrum curve, namely maximum abnormal curve B. It is not hard to obtain from the figure that, due to some collected points existing above the abnormal spectrum curves, it can be determined that the cell is subjected to interference. For accurately determining whether the cell is subjected to interference, the PUCCH range is further drawn in the figure. Furthermore, a physical random access channel PRACH range may be drawn in the figure.

In step S206: after determining that the cell is subjected to interference according to NI, interference location is triggered.

Wireless resource configuration of the cell can be inquired from a database of the network manager, when the center frequency point of the cell is inquired, the bandwidth of the cell is calculated by:
center frequency point = start frequency point + bandwidth of the cell / 2
end frequency point = start frequency point + bandwidth of the cell

If the center frequency point is 2560MHz, the bandwidth is 20M, then the bandwidth range of the cell is 2570MHz ∼ 2590MHz.

In the LTE, each RB includes 12 sub-carriers in frequency domain resource. The bandwidth of each sub-carrier is 15KHZ, thus the bandwidth occupied by an RB is 180KHZ. The frequency band range where the interference occurs can be calculated according to the sequence number of the RB reported, and the frequency band range corresponding to each RB can also be divided according to the sequence number of the RB.

In step S207: a type of reference source is determined.

When determined that the cell is subjected to interference, a reference source type mechanism is triggered. In a spectrum scanning database of the network manager, time slot allocation of the cell, bandwidth allocation of the system, and data of the cells having the same time slot allocation are found, and the spectrum curve drawn is matched with the spectrum curves caused by the found cells receiving signals from the interference sources with various types to determine the type of interference source. Therefore, an interference investigation and determination is conducted.

In step S208, according to the type of interference, an interference solution is provided.

Usual types of interference in LTE system and the interference solution are stored in the database. According to the type of interference determined by the step 207, the corresponding interference solution is inquired according to the type of the interference. The database can be accumulated and improved with interference solutions according to practices.

When the solution is implemented, variation of NI of the cell needs to be observed real-timely. If a certain operation causes the NI of the cell generating obvious variation (about 3-10db), then the solution is deemed to be efficient, and the determination of the type of interference source is accurate.

In step S209: when the interference is excluded, the spectrum scanning is stopped by the network manager. That is the network manager sends a task of stopping the spectrum scanning, reported data is not collected by the network element any more, the network manager does not receive the reported data any more, and closes the mapping and stops interference analysis.

In this example, the interference parameter may be signal power instantaneous value POWER, and may further include other parameters. The interference parameter POWER is specifically used to realize the method like the interference parameter as NI, just in the step 202, when POWER is used, in the period of non antenna correction of the cell, it is needed to calculate the time domain signal power of AC (antenna correction) serial position in sub frame 1GP (guard period), converted into an element of dBm (equivalent to RB).

### Third example:

Referring to a structural schematic diagram of a network manager according to a third embodiment of the present disclosure, shown as FIG. 4, the network manager includes a task component, a receiving component, and a determining component: the task component is configured to issue a collection task to a base station for the network manager; the receiving component is configured to receive interference parameters of a cell collected, according to the collection task, by the base station; and the determining component is configured to determine whether the cell is subjected to interference according to the interference parameters for the network manager. The concrete implement process is the same as the above implement process.

In this example, the determining component includes a drawing sub-component and a determining sub-component: the drawing sub-component is configured to draw a spectrum graphics in a bandwidth range of the cell according to the interference parameters, the spectrum graphics including a spectrum curve corresponding to the interference parameters , and draw an abnormal spectrum curve in the spectrum graphics according to a preset interference threshold value; the determining sub-component is configured to determine that the cell is subjected to interference when collected points of the spectrum curve locate above the abnormal spectrum curve.

In this example, the determining component includes a drawing sub-component and a determining sub-component: the drawing sub-component is configured to draw a spectrum graphics in a bandwidth range of the cell according to the interference parameters, the spectrum graphics including a spectrum curve corresponding to the interference parameters, draw an abnormal spectrum curve in the spectrum graphics according to a preset interference threshold value; the determining sub-component is configured to determine that the cell is subjected to interference when collected points, which locate outside of the physical uplink control channel range curve and on the spectrum curve, locate above the abnormal spectrum curve.

In this example, the interference parameters are interference parameters of resource blocks on the bandwidth of the cell; and the network manager further includes an interference location component: the interference location component is configured to acquire the bandwidth range of the cell, and acquire sequence numbers of the resource blocks on the bandwidth of the cell and bandwidth occupied by the resource blocks; and is further configured to acquire a frequency band range where the interference occurs according to the sequence numbers of the resource blocks, the bandwidth occupied by the resource blocks and the bandwidth range of the cell.

In this example, the interference parameters include at least one of low noise interference and signal power instantaneous value, and may further include other parameters. The values of the low noise interference and the signal power instantaneous value per se can be used, and maximum value or average value of the low noise interference and the signal power instantaneous value can be also used.

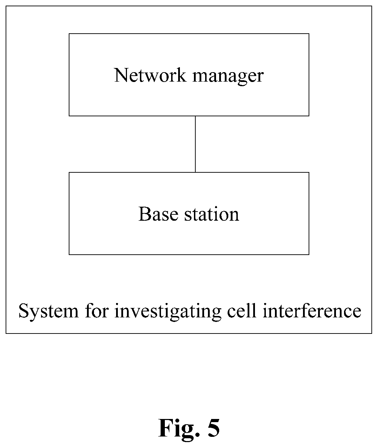

Referring to a structural schematic diagram of a system for investigating cell interference according to a third embodiment of the present disclosure, as shown in FIG. 5, the system includes the network manager and the base station as described above. The network manager sends a collection task to the base station. The base station collects interference parameters of a cell according to the collection task, and reports the interference parameters to the network manager. The network manager receives the collected interference parameters by the base station, and determines whether the cell is subjected to interference according to the collected interference parameters.

Those ordinary skilled in the art may understand that all or part steps of the above methods can be achieved by programs instructing relevant hardwares. The programs may be stored in computer readable storage medium, such as read only memory, magnetic disk, optical disc, and the like. Optionally, all or part steps of the above methods can also be implemented by using one or more integrated circuits. Accordingly, each component/element in above embodiments may be implemented by using a mode of hardwares, or also implemented by using a mode of software function components. The present disclosure is not limited to a combination of software and hardware in any specific form.

### Industrial Applicability

The above technical solutions provided by the present disclosure may be used in the process for investigating cell interference. By using the technical solution of the network manager issuing a collection task to the base station, receiving interference parameters of a cell collected, according to the collection task, by the base station, and determining whether the cell is subjected to interference according to the interference parameters received, the network manager can be used to investigate cell interference, service-affecting operations such as closing a cell, cutting power of a base station, or the like are avoided in order to investigate the existence of interference, and additional hardware cost is not be required and other soft systems do not need to be deployed. Further, the cost is reduced, and the complexity of investigating interference is decreased.

## Claims

1. A method for investigating cell interference, comprising:
a network management device sending a collection task to a base station (S101), thereby setting a spectrum scanning task, including: a cell of a base station needing to be scanned spectrum, choosing scanning mode, reporting period and period of task time and choosing interference parameters needed for conducting scanned spectrum to the cell of the base station;
the base station collecting the interference parameters of the cell, by performing spectrum scanning as set by the collection task;
the network management device receiving the interference parameters of a cell collected, according to the collection task, by the base station (S102); and
the network management device determining whether the cell is subjected to interference according to the interference parameters (S 103);
wherein the network management device determining whether the cell is subjected to interference according to the interference parameters (S 103) comprises:
generating spectrum graphics in a bandwidth range of the cell according to the interference parameters, the spectrum graphics comprising a spectrum curve corresponding to the interference parameters;
and the network management device determining whether the cell is subjected to interference according to the interference parameters (SI03) further comprises:
generating a spectrum curve corresponding to a preset interference threshold value in the spectrum graphics; and when collected points on the spectrum curve locate above the spectrum curve corresponding to a preset interference threshold value, determining that the cell is subjected to interference, or:
generating a physical uplink control channel range curve in the spectrum graphics;
generating a spectrum curve corresponding to a preset interference threshold value in the spectrum graphics; when collected points, which locate outside of the physical uplink control channel range curve and on the spectrum curve, locate above the spectrum curve corresponding to the preset interference threshold value, determining that the cell is subjected to interference.

2. The method as claimed in claim 1, wherein the interference parameters are interference parameters of resource blocks on a bandwidth of the cell;
wherein after determining that the cell is subjected to interference, the method further comprises:
acquiring a bandwidth range of the cell;
acquiring sequence numbers of the resource blocks on a bandwidth of the cell and bandwidth occupied by the resource blocks; and
acquiring a frequency band range where the interference occurs according to the sequence numbers of the resource blocks, the bandwidth occupied by the resource blocks and the bandwidth range of the cell.

3. The method as claimed in claim 1, wherein after determining that the cell is subjected to interference, the method further comprises: comparing the spectrum curve corresponding to the interference parameters with spectrum curves of preset-type interference source signals, and determining a type of the interference according to a compared result.

4. The method as claimed in claim 1, wherein the interference parameters comprise at least one of low noise interference and signal power instantaneous value.

5. A network management device, comprising a task component, a receiving component, and a determining component, wherein:
the task component is configured to send a collection task to a base station, to thereby set a spectrum scanning task, including: a cell of a base station needing to be scanned spectrum, choosing scanning mode, reporting period and period of task time and choosing interference parameters needed for conducting scanned spectrum to the cell of the base station;
the receiving component is configured to receive the interference parameters of a cell collected, according to the collection task, by the base station; and
the determining component is configured to determine whether the cell is subjected to interference according to the interference parameters;
wherein the determining component comprises: a drawing sub-component and a determining sub-component;
wherein the drawing sub-component is configured to generate spectrum graphics comprising a spectrum curve corresponding to the interference parameters in a bandwidth range of the cell according to the interference parameters and generate a spectrum curve corresponding to a preset interference threshold value in the spectrum graphics; and the determining sub-component is configured to determine that the cell is subjected to interference when collected points on the spectrum curve locate above the spectrum curve corresponding to a preset interference threshold value, or
the drawing sub-component is configured to generate spectrum graphics comprising a spectrum curve in response to the interference parameters in a bandwidth range of the cell according to the interference parameters, generate a physical uplink control channel range curve in the spectrum graphics, and generate a spectrum curve corresponding to a preset interference threshold value in the spectrum graphics; and the determining sub-component is configured to determine that the cell is subjected to interference when collected points, which locate outside of the physical uplink control channel range curve and on the spectrum curve, locate above the spectrum curve corresponding to a preset interference threshold value.

6. The network management device as claimed in claim 5, wherein the interference parameters are interference parameters of resource blocks on a bandwidth of the cell; the network management device is further configured to:
acquire a bandwidth range of the cell;
acquire sequence numbers of the resource blocks on a bandwidth of the cell and bandwidth occupied by the resource blocks; and
acquire a frequency band range where the interference occurs according to the sequence numbers of the resource blocks, the bandwidth occupied by the resource blocks and the bandwidth range of the cell.

7. The network management device as claimed in claim 5, wherein the interference parameters comprise at least one of low noise interference and signal power instantaneous value.

8. A system for investigating cell interference, wherein the system comprises the network management device as claimed in any one of claims 5 to 7 and a base station.

## Patentansprüche

1. Verfahren zur Untersuchung von Zellinterferenz, umfassend:
eine Netzwerkmanagementvorrichtung, die eine Erfassungsaufgabe an eine Basisstation (S101) sendet, wobei eine Spektrum-Scanaufgabe eingestellt wird, die Folgendes umfasst: eine Zelle einer Basisstation, die auf ihr Spektrum zu scannen ist, das Auswählen des Scan-Modus, des Berichtszeitraums und des Zeitraums der Aufgabenzeit und das Auswählen von Interferenzparametern, die zum Weiterleiten des gescannten Spektrums an die Zelle der Basisstation benötigt werden;
wobei die Basisstation die Interferenzparameter der Zelle erfasst, indem sie einen durch die Erfassungsaufgabe festgelegten Spektrumscan durchführt;
wobei die Netzwerkmanagementvorrichtung die Interferenzparameter einer Zelle empfängt, die gemäß der Erfassungsaufgabe von der Basisstation (S102) erfasst wurden; und
wobei die Netzwerkmanagementvorrichtung bestimmt, ob die Zelle gemäß den Interferenzparametern (S103) einer Interferenz ausgesetzt ist;
wobei das Bestimmen durch die Netzwerkmanagementvorrichtung, ob die Zelle gemäß den Interferenzparametern (S103) einer Interferenz ausgesetzt ist, Folgendes umfasst:
Erzeugen von Spektrumgrafiken in einem Bandbreitenbereich der Zelle gemäß den Interferenzparametern, wobei die Spektrumgrafiken eine Spektralkurve umfassen, die den Interferenzparametern entspricht;
und wobei das Bestimmen durch die Netzwerkmanagementvorrichtung, ob die Zelle gemäß den Interferenzparametern (S103) einer Interferenz ausgesetzt ist, ferner Folgendes umfasst:
Erzeugen einer Spektralkurve, die einem voreingestellten Interferenzschwellenwert in den Spektrumgrafiken entspricht; und wenn erfasste Punkte auf der Spektralkurve über der Spektralkurve liegen, die einem voreingestellten Interferenzschwellenwert entspricht, Bestimmen, dass die Zelle einer Interferenz ausgesetzt ist, oder:
Erzeugen einer physikalischen Uplink-Steuerkanalbereichskurve in den Spektrumgrafiken;
Erzeugen einer Spektralkurve, die einem voreingestellten Interferenzschwellenwert in den Spektrumgrafiken entspricht; wenn erfasste Punkte, die sich außerhalb der physikalischen Uplink-Steuerkanalbereichskurve und auf der Spektralkurve befinden, über der Spektralkurve liegen, die dem voreingestellten Interferenzschwellenwert entspricht, Bestimmen, dass die Zelle einer Interferenz ausgesetzt ist.

2. Verfahren nach Anspruch 1, wobei die Interferenzparameter Interferenzparameter von Ressourcenblöcken auf einer Bandbreite der Zelle sind;
wobei nach dem Bestimmen, dass die Zelle einer Interferenz ausgesetzt ist, das Verfahren ferner Folgendes umfasst:
Erfassen eines Bandbreitenbereichs der Zelle;
Erfassen von Sequenznummern der Ressourcenblöcke auf einer Bandbreite der Zelle und der von den Ressourcenblöcken belegten Bandbreite; und
Erfassen eines Frequenzbandbereichs, in dem die Interferenz auftritt, gemäß den Sequenznummern der Ressourcenblöcke, der von den Ressourcenblöcken belegten Bandbreite und dem Bandbreitenbereich der Zelle.

3. Verfahren nach Anspruch 1, wobei nach dem Bestimmen, dass die Zelle einer Interferenz ausgesetzt ist, das Verfahren ferner Folgendes umfasst: Vergleichen der den Interferenzparametern entsprechenden Spektralkurve mit Spektralkurven von Interferenzquellensignalen vom voreingestellten Typ und Bestimmen eines Typs der Interferenz gemäß einem Vergleichsergebnis.

4. Verfahren nach Anspruch 1, wobei die Interferenzparameter mindestens eines aus einer geringen Rauschinterferenz und einem Signalleistungssofortwert umfassen.

5. Netzwerkmanagementvorrichtung, umfassend eine Aufgabenkomponente, eine Empfangskomponente und eine Bestimmungskomponente, wobei:
die Aufgabenkomponente konfiguriert ist, um eine Erfassungsaufgabe an eine Basisstation zu senden, um dadurch eine Spektrum-Scanaufgabe einzustellen, die Folgendes umfasst: eine Zelle einer Basisstation, deren Spektrum zu scannen ist, das Auswählen des Scanmodus, des Berichtszeitraums und des Zeitraums der Aufgabenzeit und das Auswählen der Interferenzparameter, die zum Weiterleiten des gescannten Spektrums an die Zelle der Basisstation benötigt werden;
die Empfangskomponente konfiguriert ist, um die Interferenzparameter einer Zelle zu empfangen, die gemäß der Erfassungsaufgabe durch die Basisstation erfasst wurden; und
die Bestimmungskomponente konfiguriert ist, um zu bestimmen, ob die Zelle gemäß den Interferenzparametern einer Interferenz ausgesetzt ist;
wobei die Bestimmungskomponente Folgendes umfasst: eine Zeichnungsunterkomponente und eine Bestimmungsunterkomponente;
wobei die Zeichnungsunterkomponente konfiguriert ist, um Spektrumgrafiken zu erzeugen, die eine Spektralkurve umfassen, die den Interferenzparametern in einem Bandbreitenbereich der Zelle gemäß den Interferenzparametern entspricht, und eine Spektralkurve zu erzeugen, die einem voreingestellten Interferenzschwellenwert in den Spektrumgrafiken entspricht; und wobei die Bestimmungsunterkomponente konfiguriert ist, um zu bestimmen, dass die Zelle einer Interferenz ausgesetzt ist, wenn erfasste Punkte auf der Spektralkurve über der Spektralkurve liegen, die einem voreingestellten Interferenzschwellenwert entspricht, oder
wobei die Zeichnungsunterkomponente konfiguriert ist, um Spektrumgrafiken, die eine Spektralkurve umfassen, als Reaktion auf die Interferenzparameter in einem Bandbreitenbereich der Zelle gemäß den Interferenzparametern zu erzeugen, eine physikalische Uplink-Steuerkanalbereichskurve in den Spektrumgrafiken zu erzeugen und eine Spektralkurve entsprechend einem voreingestellten Interferenzschwellenwert in der Spektrumgrafik zu erzeugen; und wobei die Bestimmungsunterkomponente konfiguriert ist, um zu bestimmen, dass die Zelle einer Interferenz ausgesetzt ist, wenn erfasste Punkte, die sich außerhalb der physikalischen Uplink-Steuerkanalbereichskurve und auf der Spektralkurve befinden, über der Spektralkurve liegen, die einem voreingestellten Interferenzschwellenwert entspricht.

6. Netzwerkmanagementvorrichtung nach Anspruch 5, wobei die Interferenzparameter Interferenzparameter von Ressourcenblöcken auf einer Bandbreite der Zelle sind; wobei die Netzwerkmanagementvorrichtung ferner konfiguriert ist, um:
einen Bandbreitenbereich der Zelle zu erfassen;
Sequenznummern der Ressourcenblöcke auf einer Bandbreite der Zelle und der von den Ressourcenblöcken belegten Bandbreite zu erfassen; und
einen Frequenzbandbereich zu erfassen, in dem die Interferenz gemäß den Sequenznummern der Ressourcenblöcke, der von den Ressourcenblöcken belegten Bandbreite und dem Bandbreitenbereich der Zelle auftritt.

7. Netzwerkmanagementvorrichtung nach Anspruch 5, wobei die Interferenzparameter mindestens eines aus einer niedrigen Rauschinterferenz und einem Signalleistungssofortwert umfassen.

8. System zur Untersuchung von Zellinterferenz, wobei das System die Netzwerkmanagementvorrichtung nach einem der Ansprüche 5 bis 7 und eine Basisstation umfasst.

## Revendications

1. Procédé de recherche d'interférence de cellules, comprenant :
un dispositif de gestion de réseau envoyant une tâche de collecte à une station de base (S101), définissant ainsi une tâche de balayage du spectre, comprenant : une cellule d'une station de base qui nécessite le balayage du spectre, le choix d'un mode de balayage, d'une période de rapport et d'une période de durée de tâche et le choix des paramètres d'interférence nécessaires pour conduire le spectre balayé vers la cellule de la station de base ;
la collecte par la station de base des paramètres d'interférence de la cellule par un balayage du spectre tel que défini par la tâche de collecte ;
la réception par le dispositif de gestion de réseau des paramètres d'interférence d'une cellule collectés, selon la tâche de collecte, par la station de base (S 102) ; et
la détermination par le dispositif de gestion de réseau si la cellule est soumise à des interférences en fonction des paramètres d'interférence (S103) ;
dans laquelle la détermination par le dispositif de gestion de réseau si la cellule est soumise à des interférences en fonction des paramètres d'interférence (S103) comprend :
la génération des graphiques de spectre dans une plage de bande passante de la cellule en fonction des paramètres d'interférence, les graphiques de spectre comprenant une courbe de spectre correspondant aux paramètres d'interférence ; et
la détermination par le dispositif de gestion de réseau si la cellule est soumise à des interférences selon les paramètres d'interférence (S103) comprend en outre :
la génération d'une courbe de spectre correspondant à une valeur seuil d'interférence prédéfinie dans les graphiques de spectre ; et la détermination, lorsque des points collectés sur la courbe de spectre se situent au-dessus de la courbe de spectre correspondant à une valeur seuil d'interférence prédéfinie, que la cellule est soumise à des interférences, ou :
la génération d'une courbe de plage de canal physique de commande de liaison montante dans les graphiques de spectre ;
la génération d'une courbe de spectre correspondant à une valeur seuil d'interférence prédéfinie dans les graphiques de spectre; la détermination, lorsque les points collectés, lesquels se situent en dehors de la courbe de plage de canal physique de commande de liaison montante et sur la courbe de spectre, se situent au-dessus de la courbe de spectre correspondant à la valeur seuil d'interférence prédéfinie, que la cellule est soumise à des interférences.

2. Procédé selon la revendication 1, dans lequel les paramètres d'interférence sont des paramètres d'interférence des blocs de ressources sur une bande passante de la cellule ;
dans lequel, après avoir déterminé que la cellule est soumise à des interférences, ledit procédé comprend en outre :
l'acquisition d'une plage de bande passante de la cellule ;
l'acquisition des numéros de séquence des blocs de ressources sur une bande passante de la cellule et une bande passante occupée par les blocs de ressources ; et
l'acquisition d'une plage de bandes de fréquences où l'interférence se produit en fonction des numéros de séquence des blocs de ressources, de la bande passante occupée par les blocs de ressources et de la plage de bande passante de la cellule.

3. Procédé selon la revendication 1, dans lequel après avoir déterminé que la cellule est soumise à des interférences, ledit procédé comprend en outre : la comparaison de la courbe de spectre correspondant aux paramètres d'interférence avec des courbes de spectre de signaux de source d'interférence de type prédéfini, et la détermination d'un type d'interférence en fonction d'un résultat comparé.

4. Procédé selon la revendication 1, dans lequel les paramètres d'interférence comprennent au moins une valeur d'interférence à faible bruit et une valeur de puissance instantanée de signal.

5. Dispositif de gestion de réseau, comprenant un composant de tâche, un composant de réception et un composant de détermination, dans lequel :
le composant de tâche est configuré pour envoyer une tâche de collecte à une station de base pour définir une tâche de balayage du spectre, comprenant : une cellule d'une station de base qui nécessite le balayage du spectre, le choix d'un mode de balayage, d'une période de rapport et d'une période de durée de tâche et le choix des paramètres d'interférence nécessaires pour conduire le spectre balayé vers la cellule de la station de base ;
le composant récepteur est configuré pour recevoir les paramètres d'interférence d'une cellule collectés, selon la tâche de collecte, par la station de base ; et
le composant de détermination est configuré pour déterminer si la cellule est soumise à des interférences en fonction des paramètres d'interférence ;
dans lequel le composant de détermination comprend : un sous-composant de dessin et un sous-composant de détermination ;
dans lequel le sous-composant de dessin est configuré pour générer des graphiques de spectre comprenant une courbe de spectre correspondant aux paramètres d'interférence dans une plage de bande passante de la cellule en fonction des paramètres d'interférence et pour générer une courbe de spectre correspondant à une valeur seuil d'interférence prédéfinie dans les graphiques de spectre; et le sous-composant de détermination est configuré pour déterminer que la cellule est soumise à des interférences lorsque les points collectés sur la courbe de spectre se situent au-dessus de la courbe de spectre correspondant à une valeur seuil d'interférence prédéfinie, ou
le sous-composant de dessin est configuré pour générer des graphiques de spectre comprenant une courbe de spectre en réponse aux paramètres d'interférence dans une plage de bande passante de la cellule en fonction des paramètres d'interférence, pour générer une courbe de plage de canal physique de commande de liaison montante dans les graphiques de spectre et pour générer une courbe de spectre correspondant à une valeur seuil d'interférence prédéfinie dans les graphiques de spectre; et le sous-composant de détermination est configuré pour déterminer que la cellule est soumise à des interférences lorsque les points collectés, lesquels se situent en dehors de la courbe de plage de canal physique de commande de liaison montante et sur la courbe de spectre, se situent au-dessus de la courbe de spectre correspondant à une valeur de seuil d'interférence prédéfinie.

6. Dispositif de gestion de réseau selon la revendication 5, dans lequel les paramètres d'interférence sont des paramètres d'interférence des blocs de ressources sur une bande passante de la cellule ; ledit dispositif de gestion de réseau étant en outre configuré :
pour acquérir une plage de bande passante de la cellule ;
pour acquérir des numéros de séquence des blocs de ressources sur une bande passante de la cellule et une bande passante occupée par les blocs de ressources ; et
pour acquérir une plage de bandes de fréquences où l'interférence se produit en fonction des numéros de séquence des blocs de ressources, de la bande passante occupée par les blocs de ressources et de la plage de bande passante de la cellule.

7. Dispositif de gestion de réseau selon la revendication 5, dans lequel les paramètres d'interférence comprennent au moins une valeur d'interférence à faible bruit et une valeur de puissance instantanée de signal.

8. Système de recherche d'interférence de cellules, dans lequel ledit système comprend le dispositif de gestion de réseau selon l'une quelconque des revendications 5 à 7 et une station de base.
